**Europäisches Patentamt**

**European Patent Office**

**Office européen des brevets**

(19)

(11) Veröffentlichungsnummer: **0 311 978 B1**

(12) # EUROPÄISCHE PATENTSCHRIFT

(45) Veröffentlichungstag der Patentschrift:
19.06.91 Patentblatt 91/25

(51) Int. Cl.⁵: **C21C 5/28, C21C 5/56**

(21) Anmeldenummer: 88116862.9

(22) Anmeldetag: 11.10.88

(54) Verfahren zum Zuführen von Wärmeenergie in eine Metallschmelze.

(30) Priorität: 16.10.87 DE 3735150

(43) Veröffentlichungstag der Anmeldung:
19.04.89 Patentblatt 89/16

(45) Bekanntmachung des Hinweises auf die
Patenterteilung:
19.06.91 Patentblatt 91/25

(84) Benannte Vertragsstaaten:
AT BE CH DE ES FR GB GR IT LI LU NL SE

(56) Entgegenhaltungen:
DE-A- 2 737 441
DE-A- 2 933 133
DE-B- 2 838 983
DE-C- 228 086
DE-C- 394 120
DE-C- 1 013 875
GB-A- 513 783

(56) Entgegenhaltungen:
US-A- 2 805 146
METAL BULLETIN MONTHLY, Oktober 1986,
Seiten 47-51, London: "Three years of EOF
operation at Pains"
PATENT ABSTRACTS OF JAPAN, Band 4, Nr.
93 (C-17)(575), 5. Juli 1980; & JP - A - 5 558 313

(73) Patentinhaber: KORTEC AG
Baarerstrasse 21
CH-6300 Zug (CH)

(72) Erfinder: Weber, Ralph
Rua Campo Belo, 300
22.221 Laranjeiras Rio de Janeiro- RJ - (BR)
Erfinder: Wells, William
Rua Cassio da Costa Vidigal 68 Apt. 201
01456 Sao Paulo-SP (BR)

(74) Vertreter: Blumbach Weser Bergen Kramer
Zwirner Hoffmann Patentanwälte
Radeckestrasse 43
W-8000 München 60 (DE)

## Beschreibung

Die Erfindung betrifft ein Verfahren zum Zuführen von Wärmeenergie in eine Eisenschmelze gemäß dem Oberbegriff des Patentanspruches 1.

Bei dem durch die Zeitschrift MBM–Metal Bulletin Monthly – Oktober 1986, Seiten 47 bis 51, bekanntgewordenen Verfahren dieser Art wird fester Kohlenstoff durch Unterbaddüsen in eine Metallschmelze eingeblasen.

Die Verbrennung von eingeblasenem, festen Kohlenstoff durch entsprechende Sauerstoffmengen ergibt in der Eisenschmelze keinen wesentlichen Gewinn an ausnutzbarer Wärme, da die Reaktionswärme, die bei der Verbrennung entsteht, etwa dem Wärmebedarf entspricht, um das Reaktionsgas dieser Verbrennung – im wesentlichen CO – auf die Temperatur der Metallschmelze aufzuheizen. Bei dem bekannten Verfahren werden deshalb die aus der Eisenschmelze austretenden CO-haltigen Reaktionsgase nachverbrannt und dann durch einen oberhalb des Schmelzgefäßes angeordneten Chargiergutvorwärmer hindurchgeleitet, um hier die einzuschmelzenden Eisenwerkstoffe auf Temperaturen oberhalb 850°C aufzuheizen, bevor sie in das Schmelzgefäß chargiert werden.

Hierdurch läßt sich der thermische Gesamtwirkungsgrad wesentlich verbessern.

Durch die DE-AS 28 38 983 ist ein Verfahren der einleitend genannten Art bekanntgeworden, bei dem Sauerstoff zusätzlich in Form eines Freistrahls auf die Badoberfläche geblasen wird. Hierdurch läßt sich die bei der Nachverbrennung des Kohlenmonoxids im Gasraum entstehende Wärme dem Schmelzbad wieder zuführen und der Schrottsatz erhöhen.

Die DE-OS 27 37 441 beschreibt ein Verfahren zum kontinuierlichen Aufheizen einer Eisenschmelze, die vorzugsweise aus Schrott erzeugt wird, bei dem die Eisenschmelze in einen von dem Schmelzgefäß getrennten, jedoch damit in direkter Verbindung stehenden, Aufheizraum strömt und der Schmelze im Aufheizraum fester Kohlenstoff und Sauerstoff zugeführt werden. Der Kohlenstoff kann hierbei als verschiebbarer Formkörper, beispielsweise als nachschiebbare Elektrode unterhalb der Badoberfläche in die Schmelze gelangen, er kann, vorzugsweise in Form von stückigem Koks, auch durch einen Schacht eingebracht werden, der oberhalb oder unterhalb der Badoberfläche endet. Die Kokssäule wird hierbei durch die heißen Reaktionsgase aus dem Aufheizraum vorgeheizt.

Durch die DE-OS 29 33 133 ist ein Verfahren zum Zugeben von insbesondere feinteiligem Zugabematerial zu einer Metall-, insbesondere Stahlschmelze, bekannt geworden, bei dem das Zugabematerial bindemittelfrei in einem Blechgebinde vakuumverpackt und in dieser Form der Metallschmelze zugegeben wird. Bei dem Zugabematerial kann es sich um Legierungszusätze handeln, mit denen die Zusammensetzung der Metallschmelze einreguliert wird, bei Stahlschmelzen also etwa Ferrolegierungen, Schwefel, Kohle, Erze und Aluminium zur Beruhigung. Da sich das granulatartige Zugabematerial vakuumverpackt in einer Blechtonne oder Dose befindet, wird beim Schmelzen der Dose die Schmelze zwischen die Partikel hineingezogen und damit ein besonders guter Kontakt zwischen Schmelze und Zugabematerial hergestellt.

Im übrigen ist es aus DE-C-228 086 bzw. JP-A-5558313 bezannt, Kohlenstoff zu einer Metallschmelze in Form von in Metallbehälter gefüllter Feinzohle zwecks Aufhohlen der in eine Gießpfanne oderform fließenden Schmelze bzw. der in einem Elektroofen befindlichen Schmelze zuzuführen.

Der Erfindung liegt die Aufgabe zugrunde, bei einem Verfahren nach dem Oberbegriff von Anspruch 1 die Wärmezufuhr in die Schmelze zu steigern und damit das Einschmelzen eines höheren Anteils an festen metallischen Werkstoffen, insbesondere festen Eisenwerkstoffen, zu ermöglichen. Die Aufgabe wird durch die kennzeichnenden Merkmale der Ansprüche 1 und 17 gelöst. Vorteilhafte Ausgestaltungen der Erfindungen sind den übrigen Ansprüchen zu entnehmen.

Der Erfindung liegen die folgenden Gedanken zugrunde.

Der für die Wärmeenergiezufuhr in das Schmelzgefäß eingebrachte Kohlenstoff soll möglichst vollständig im Bad gelöst, also in $Fe_3C$ übergeführt werden, um mit dem in die Schmelze durch Unterbaddüsen oder durch auf die Badoberfläche gerichtete Düsen bzw. Lanzen geblasenen Sauerstoff eine direkte Energieumwandlung im Bad und damit eine bessere Ausnutzung der Kohle zu erreichen. Die Kohlenstoffauflösung im Bad ist unter anderem vom Kohlenstoffgehalt des Schmelzbades, der Temperatur des Schmelzbades, der Temperatur der mit der Schmelze in Verbindung gebrachten Kohle, sowie der Kontaktzeit der Kohle mit der Schmelze abhängig.

Wird kalte Kohle mittels eines Trägergases durch Unterbaddüsen in eine Stahlschmelze eingeblasen, dann kann selbst bei hoher Temperatur und niedrigem Kohlenstoffgehalt des Schmelzbades, das heißt bei Bedingungen, die aufgrund des Eisenkohlenstoffdiagramms eine schnelle Auflösung des Kohlenstoffes erwarten lassen, nur ein Teil des eingeblasenen Kohlenstoffes gelöst werden, da der Kohlenstoff mit dem Trägergas beschleunigt nach oben befördert wird und während der kurzen Verweilzeit im Bad im Bereich des Kohlenstoffstromes das Bad örtlich stark abgekühlt und der Kohlenstoffgehalt des Bades an dieser Stelle erhöht, d.h. im Bereich des Kohlenstoffstromes die Löslichkeit vermindert wird. Die Folge ist, daß ein wesentlicher Teil der Kohle das Bad ohne Reaktion mit dem Eisen verläßt.

Bei dem erfindungsgemäßen Verfahren wird der Kohlenstoff, der sich in den in das Schmelzgefäß chargierten Blechbehältern befindet, nicht sofort mit der Schmelze in Berührung gebracht, sondern erst, wenn der betreffende Blechbehälter durchgeschmolzen ist. Durch die Auswahl des Blechwerkstoffes und der Blechstärke läßt sich der Zeitpunkt, zu dem nach Beginn des Sauerstoffblasens der Kohlenstoff mit der Schmelze in Berührung kommt, steuern und damit auch die Schmelzbadbedingung für eine gute Löslichkeit des Kohlenstoffes im Bad, nämlich ausreichend niedriger Kohlenstoffgehalt und ausreichend hohe Temperatur. Gleichzeitig wird aber auch bis zum Durchschmelzen des Blechbehälters der Kohlenstoff im Behälter auf nahezu die Schmelztemperatur seiner Blechumhüllung erhitzt, so daß er zu dem Zeitpunkt, in dem er mit einem Bad der gewünschten Auflösungsbedingungen in Berührung gebracht wird, nahezu die Temperatur dieses Bades besitzt und an dieser Stelle keine Abkühlung bewirkt. Dies ist beispielsweise beim Auflösen in einem Stahlbad insofern wesentlich, weil die spezifische Wärmekapazität von Kohle bei den betreffenden Temperaturen etwa doppelt so groß wie die der Stahlschmelze ist.

Schließlich ist beim erfindungsgemäßen Verfahren im Vergleich zum Kohleeinblasen auch die Kontaktzeit der Kohle mit der Schmelze wesentlich vergrößert, nachdem der Behälter aufgeschmolzen ist, da der Auftrieb durch Gase beseitigt ist, die Kohlenstoffstücke bzw. -partikel gegebenenfalls durch auflastenden Stahlschrott nach unten gedrückt werden und weil sie vom Boden des Schmelzgefäßes bis zur Badoberfläche eine lange Wegstrecke zurückzulegen haben.

Wenn die Kohle mit der Schmelze in Berührung kommt, muß sichergestellt sein, daß sie von Wasser befreit ist. Werden dicht verschlossene Blechbehälter eingesetzt, dann dürfen diese keine Feuchtigkeit enthalten. Beim Einsatz gasdurchlässiger Blechbehälter müssen diese vor dem Eintauchen in die Schmelze vorerhitzt werden, um wenigstens den Wasserdampf, möglichst aber auch andere flüchtige Bestandteile, die den Auftrieb vergrößern, auszutreiben. Sie müssen also wenigstens auf eine Temperatur oberhalb 100°C vorerhitzt werden. Dieses Vorerhitzen kann im Schmelzgefäß selbst erfolgen, solange sich dort keine Schmelze befindet, oder in einem gesonderten Gefäß beispielsweise in einem Chargiergutvorwärmer. Bei einer Vorerhitzung auf höhere Temperaturen innerhalb oder außerhalb des Schmelzgefäßes läßt sich der Metallschmelze nicht nur die chemische Umwandlungswärme des festen Kohlenstoffes, sondern auch die fühlbare Wärme zuführen, was im Hinblick auf die hohe spezifische Wärmekapazität der Kohle, verglichen zur Metallschmelze besonders vorteilhaft ist. Vorzugsweise werden die den Kohlenstoff enthaltenden Blechbehälter vor dem Einbringen in das Schmelzgefäß in einem Chargiergutvorwärmer erhitzt, durch den die heißen Abgase des Schmelzgefäßes während eines vorhergehenden Einschmelzprozesses hindurchgeleitet werden.

Selbstverständlich muß, insbesondere beim Einsatz von Unterbaddüsen, Sorge getragen werden, daß die Behälter beim Chargieren nicht unmittelbar vor eine Sauerstoffdüse zu liegen kommen, da sie sonst durch den eingeblasenen Sauerstoff vorzeitig aufgeschmolzen werden können. Bei einem bodenblasenden Konverter sind deshalb die Sauerstoffdüsen entweder einseitig anzuordnen oder zu betreiben und die den Kohlenstoff enthaltenden Blechbehälter an eine Stelle zu chargieren, die dem unmittelbaren Einwirkungsbereich des Sauerstoffstrahls entzogen ist.

Da sich durch die Auswahl des Werkstoffes und die Stärke der Blechbehälter der Zeitpunkt steuern läßt, zu dem nach Beginn des Sauerstoffblasens der Kohlenstoff mit der Schmelze in Berührung kommt, kann es vorteilhaft sein, bei einer Charge Blechbehälter aus Werkstoffen mit verschiedenen Schmelztemperaturen, wie Stahlbleche verschiedenen Kohlenstoffgehalts, mit verschiedener Stärke und gegebenenfalls in verschiedener Größe einzusetzen, um den Auflösungsprozeß der Kohle im Schmelzbad in der gewünschten Weise ablaufen zu lassen.

Das Verfahren zum Zuführen von Wärmeenergie in eine Metallschmelze läßt sich unter Berücksichtigung der genannten Bedingungen als einstufiges oder mehrstufiges Verfahren bei LD-Konvertern, bodenblasenden Konvertern, Siemens-Martin-Öfen, Lichtbogenöfen oder anderen Schmelzgefäßen einsetzen, in denen Sauerstoff in die Metallschmelze eingeblasen wird. In besonderer Weise ist es jedoch geeignet, für einen Einsatz beim sogenannten EOF-Verfahren, wie es in der Zeitschrift MBM–Metal Bulletin Monthly – Oktober 1986, Seiten 47-51 beschrieben ist.

Die Erfindung wird durch ein Ausführungsbeispiel anhand zweier Figuren näher erläutert. Es zeigen

Fig. 1 schematisch einen Längsschnitt eines Schmelzgefäßes mit aufgesetztem Chargiergutvorwärmer ;

Fig. 2 einen Kohlenstoff enthaltenden Blechbehälter.

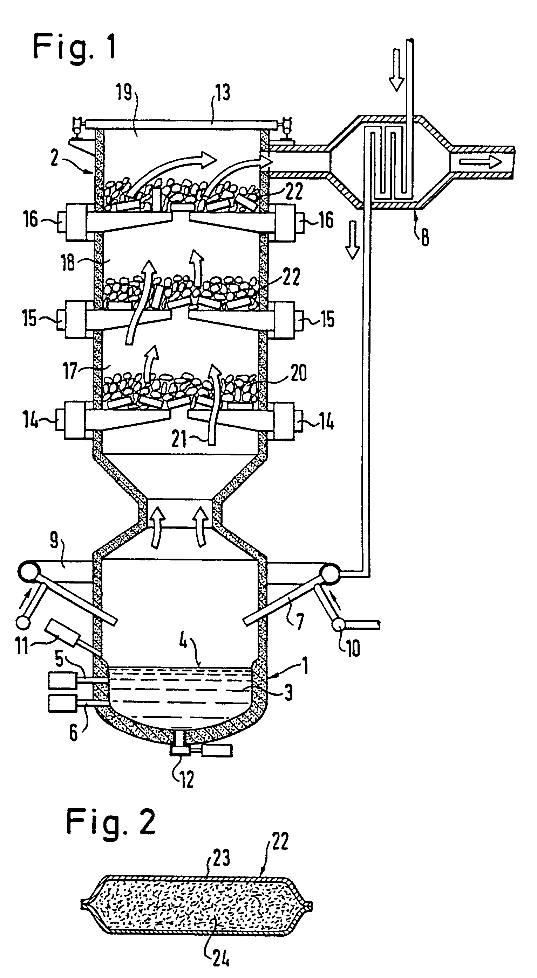

Fig. 1 zeigt ein Schmelzgefäß 1 mit einem darüber angeordneten Chargiergutvorwärmer 2. Das Schmelzgefäß 1 nimmt eine Eisenschmelze 3 auf. Der Badspiegel dieser Eisenschmelze ist mit 4 bezeichnet. Unterhalb des Badspiegels 4 münden in das Schmelzgefäß 1 Unterbaddüsen 5 zum Einblasen von Sauerstoff sowie Feststoffdüsen 6 zum Einblasen von Feststoffen, wie pulverisierter Kohle oder Zuschlägen, mittels eines Trägergases. Oberhalb des Badspiegels 4 münden weitere Düsen 7 zum Einblasen von in einem Wärmetauscher 8 vorgewärmter Luft, die über eine Ringleitung 9 zuführbar ist, sowie zum Einblasen von Sauerstoff, der über eine Ringleitung 10 eingeleitet werden kann. Außerdem sind oberhalb des Badspiegels 4 noch Brenner 11 vorgesehen. Im Boden des Schmelzgefäßes 1 befindet sich eine als Schieber ausgebildete Abstichvorrichtung 12.

Der Chargiergutvorwärmer 2 ist in Form eines Behälters ausgebildet, der oben durch einen horizontal verfahrbaren Deckel 13 verschließbar ist. Durch Rostteile 14, 15 und 16, die durch eine Betätigungseinrichtung zwischen einer Schließposition, in der sie in das Innere des Behälters ragen (dargestellte Position), und einer Freigabeposition, in der sie aus dem Behälterinneren zurückgezogen sind, bewegbar sind, ist der Behälter in drei übereinanderliegende Vorwärmabschnitte 17, 18 und 19 unterteilt. In diesen Vorwärmabschnitten wird das Chargiergut aufgenommen und von den heißen Abgasen aus dem Schmelzgefäß, wie durch Pfeile 21 angedeutet, durchströmt und hierbei erhitzt. Das Chargiergut 20 besteht im wesentlichen aus einzuschmelzenden festen Eisenwerkstoffen, wie Stahlschrott. Unterhalb dieser festen Eisenwerkstoffe befinden sich in den einzelnen Vorwärmabschnitten mit Kohle befüllte Stahlblechbehälter 22.

Fig. 2 zeigt in vergrößerter Darstellung im Schnitt einen solchen Stahlblechbehälter 22. Die Stahlblechummantelung ist mit 23 bezeichnet, der im wesentlichen aus körniger Kohle bestehende Inhalt mit 24. Derartige Elemente lassen sich beispielsweise dadurch herstellen, daß man ein Stahlrohr mit körniger Kohle befüllt, die gegebenenfalls mit einem organischen Bindemittel, wie Teer oder Melasse, vermischt ist und durch Zusammenquetschen und Auftrennen des Stahlrohres die mit Kohlenstoff befüllten Blechbehälter der gewünschten Länge gewinnt. Der Verschluß an den Enden soll hierbei gasdurchlässig seine, damit beim Erhitzen dieser ummantelten Kohlebriketts Gase, insbesondere Feuchtigkeit entweichen können. Gegebenenfalls sind besondere Gasdurchlässe in der Stahlblechummantelung vorzusehen. Die ummantelten Kohlebriketts können auch Legierungszusätze, wie Ferrosilicium enthalten.

Im folgenden wird als ein Beispiel ein Verfahrensablauf mit der in Fig. 1 dargestellten Vorrichtung beschrieben.

Nach Abstechen der im Schmelzgefäß gebildeten Stahlschmelze bei einer Abstichtemperatur von etwa 1670°C wird in das Schmelzgefäß 1 flüssiges Roheisen einer Temperatur von 1250°C mit einem Kohlenstoffgehalt von 4% eingefüllt. Danach wird durch Ausfahren der Rostteile 14 der Inhalt des untersten Vorwärmabschnittes 17 in das Schmelzgefäß chargiert, wobei sich wegen der Verengung zwischen Schrottvorwärmer und Schmelzgefäß die Charge in der Mitte des Schmelzgefäßes kegelförmig aufhäuft. Die mit körniger Kohle befüllten Stahlblechbehälter 22 werden durch die darüberliegenden festen Eisenwerkstoffe in die Roheisenschmelze gedrückt und die Schmelze zum Rand des Gefäßes verdrängt, so daß die Sauerstoffdüsen von dem Schmelzbad bedeckt werden. Das Chargiergut aus dem Vorwärmabschnitt 17 ist beim vorhergehenden Einschmelzprozeß auf eine Temperatur von oberhalb 850°C aufgeheizt worden.

Nach dem Einfahren der Rostteile 14 werden nacheinander die Rostteile 15 und 16 aus- und eingefahren, um das Chargiergut aus den Vorwärmabschnitten 18 und 19 in den jeweils darunter befindlichen Vorwärmabschnitt zu befördern. Sodann wird in den obersten Vorwärmabschnitt 19 nach Entfernen des Deckels 13 der Inhalt eines Chargierkorbes chargiert, in den die Stahlblechbehälter 22 unterhalb der festen Eisenwerkstoffe eingebracht worden sind. Nach dem Verschließen des Gefäßes mit dem Deckel 13 wird mit dem Sauerstoffeinblasen durch die Unterbaddüsen 5 begonnen. Durch Verbrennen des in der Roheisenschmelze gelösten Kohlenstoffs wird die Temperatur der Schmelze erhöht und der Kohlenstoffgehalt der Schmelze herabgesetzt. Hierbei werden auch die mit der Schmelze in Berührung stehenden oder in Berührung kommenden Stahlblechbehälter entsprechend erhitzt. Bei etwa 1530°C schmilzt die Stahlblechummantelung der Behälter 22 und der feste Kohlenstoff löst sich im Bad. Die Auflösung erfolgt wegen der hohen Temperatur und des geringen Kohlenstoffgehalts des Schmelzbades sehr schnell. Da die mit der Schmelze in Berührung kommende Kohle, die bereits beim Vorerhitzen im Chargiergutvorwärmer von Gasen befreit wurde durch die auflastenden festen Eisenwerkstoffe in die Schmelze gedrückt werden, besteht in Verbindung mit der hohen Auflösegeschwindigkeit des Kohlenstoffs und der verhältnismäßig langen Wegstrecke keine Gefahr, daß der Kohlenstoff unausgenützt aus dem Bad nach oben entweicht.

Das aus dem Schmelzbad austretende CO-haltige Abgas wird mittels der durch die Düsen 7 zugeführten vorgewärmten Luft, die mit Sauerstoff angereichert sein kann, nachverbrannt, um die im Brennstoff enthaltene Energie voll für den Prozeß auszunutzen. Die heißen Abgase erhitzen das Chargiergut in den Vorwärmabschnitten auf über 850°C. Die Temperatur der Abgase liegt nach Verlassen des Wärmetauschers 8 unterhalb 200°C.

Durch die Feststoffdüsen 6 können zur kurzzeitigen Temperatursteuerung oder Analysenkorrektur während des Sauerstoffblasens weitere Feststoffe, wie pulverisierte Kohle, eingeleitet werden. Die Brenner 11 können zum Einbringen zusätzlicher Wärmeenergie dienen.

**Ansprüche**

1. Verfahren zum Zuführen von Wärmeenergie in eine Metallschmelze, bei dem in ein die Metallschmelze aufnehmendes Schmelzgefäß fester Kohlenstoff und einzuschmelzende feste metallische Werkstoffe, vorzugsweise Stahlschrott eingebracht und durch wenigstens eine Düse und/oder wenigstens eine Lanze in eine im Schmelzgefäß verbliebene Restschmelze oder in eine in das Schmelzgefäß chargierte Metallschmelze Sauerstoff eingeblasen wird, dadurch gekennzeichnet, daß Kohlenstoff eingefüllt in Blechbehältern chargiert wird, wobei der Werkstoff des Bleches so ausgewählt ist, daß sein Schmelzpunkt in dem Temperaturbereich liegt, in dem die einzuschmelzenden metallischen Werkstoffe schmelzen und daß die Blechbehälter beim Sauerstoffeinblasen durch darüberliegende feste metallische Werkstoffe nach unten, in die Schmelze gedrückt werden.

2. Verfahren nach Anspruch 1, dadurch gekennzeichnet, daß die Blechbehälter gasdurchlässig ausgebildet sind.

3. Verfahren nach Anspruch 1 oder 2, dadurch gekennzeichnet, daß die den Kohlenstoff enthaltenden Blechbehälter vor dem Eintauchen in die Schmelze bzw. vor dem Bedecken mit Schmelze erhitzt werden.

4. Verfahren nach Anspruch 3 dadurch gekennzeichnet, daß die den Kohlenstoff enthaltenden Blechbehälter auf über 100°C erhitzt werden.

5. Verfahren nach Anspruch 3, dadurch gekennzeichnet, daß die den Kohlenstoff enthaltenden Blechbehälter auf eine Temperatur bis nahe dem Erweichungspunkt des Blechwerkstoffes erhitzt werden.

6. Verfahren nach einem der Ansprüche 3 bis 5, da durch gekennzeichnet, daß die den Kohlenstoff enthaltenden Blechbehälter im Schmelzgefäß vor dem Bedecken mit Schmelze erhitzt werden.

7. Verfahren nach einem der Ansprüche 3 bis 6, dadurch gekennzeichnet, daß die den Kohlenstoff enthaltenden Blechbehälter in einem Chargiergutvorwärmer erhitzt werden, durch den heiße Abgase des Schmelzgefäßes hindurchgeleitet werden.

8. Verfahren nach Anspruch 7, dadurch gekennzeichnet, daß in einen oberhalb des Schmelzgefäßes angeordneten Chargiergutvorwärmer die den Kohlenstoff enthaltenden Blechbehälter und auf diese die einzuschmelzenden metallischen Werkstoffe chargiert werden und die aus der Metallschmelze austretenden CO-haltigen Abgase vor ihrem Eintritt in den Chargiergutvorwärmer nachverbrannt werden.

9. Verfahren nach einem der Ansprüche 1 bis 8, dadurch gekennzeichnet, daß als metallische Werkstoffe Eisenwerkstoffe und als Metallschmelze eine Eisen- bzw. Stahlschmelze verwendet werden.

10. Verfahren nach einem der Ansprüche 1 bis 9, dadurch gekennzeichnet, daß die Blechbehälter neben festem Kohlenstoff Legierungszusätze oder andere Zuschlagstoffe enthalten.

11. Verfahren nach einem der Ansprüche 1 bis 10, dadurch gekennzeichnet, daß die Blechbehälter neben dem festen Kohlenstoff ein Bindemittel enthalten.

12. Verfahren nach einem der Ansprüche 1 bis 11, dadurch gekennzeichnet, daß die Blechbehälter ein Volumen von 0,5 bis 50 dm³ aufweisen.

13. Verfahren nach einem der Ansprüche 1 bis 12, dadurch gekennzeichnet, daß die Blechbehälter eine Dicke von 1 bis 2 dm aufweisen.

14. Verfahren nach einem der Ansprüche 1 bis 13, dadurch gekennzeichnet, daß die Blechbehälter eine Wandstärke von 0,5 bis 5 mm aufweisen.

15. Verfahren nach einem der Ansprüche 1 bis 14, dadurch gekennzeichnet, daß die Blechbehälter durch an beiden Enden verschlossene, rohrförmige Elemente gebildet sind.

16. Verfahren nach einem der Ansprüche 1 bis 15, dadurch gekennzeichnet, daß die den Kohlenstoff enthaltenden Blechbehälter derart in das Schmelzgefäß chargiert werden, daß sie der unmittelbaren Einwirkung des in die Metallschmelze eingeblasenen Sauerstoffs entzogen sind.

17. Verfahren zum Zuführen von Wärmeenergie in eine Metallschmelze, bei dem in ein die Metallschmelze aufnehmendes Schmelzgefäß fester Kohlenstoff und einzuschmelzende feste metallische Werkstoffe, vorzugsweise Stahlschrott eingebracht und durch wenigstens eine Düse und/oder wenigstens eine Lanze in eine im Schmelzgefäß verbliebene Restschmelze oder in eine in das Schmelzgefäß chargierte Metallschmelze Sauerstoff eingeblasen wird, dadurch gekennzeichnet, daß Kohlenstoff eingefüllt in Blechbehältern chargiert wird und durch die Auswahl des Werkstoffs und gegebenenfalls der Wandstärke der Blechbehälter das Durchschmelzen der Blechbehälter und der Beginn der Auflösung des im Blechbehälter enthaltenen Kohlenstoffs gesteuert wird.

18. Verfahren nach einem der Ansprüche 1 bis 17, da durch gekennzeichnet, daß der Werkstoff der Blechbehälter aus Stahl besteht und durch den Kohlenstoffgehalt des Stahls die Schmelztemperatur des Blechbehälters gesteuert wird.

19. Verfahren nach Anspruch 17 oder 18, dadurch gekennzeichnet, daß der den Beginn der Kohlenstoffauflösung bestimmende Werkstoff und gegebenenfalls die Wandstärke der Blechbehälter im Hinblick auf die gewünschte Zusammensetzung des Schmelzbades ausgewählt sind.

20. Verfahren nach einem der Ansprüche 17 bis 19, dadurch gekennzeichnet, daß Blechbehälter aus Werkstoffen, die verschiedene Schmelzpunkte aufweisen, und/oder mit verschiedenen Blechstärken chargiert werden.

21. Verfahren nach Anspruch 19 oder 20, dadurch gekennzeichnet, daß der Werkstoff des Bleches und die Blechstärke so ausgewählt sind, daß der Blechmantel erst dann durchschmilzt, wenn der Kohlenstoffgehalt der Metallschmelze auf weniger als 2 Gew.-% abgesunken ist und die Temperatur der Metallschmelze wenigstens 1400°C erreicht hat.

22. Verfahren nach Anspruch 21, dadurch gekennzeichnet, daß der Werkstoff des Bleches und die Blechstärke so ausgewählt sind, daß der Blechmantel erst dann durchschmilzt, wenn der Kohlenstoffgehalt der Metallschmelze auf weniger als 1 Gew.-% abgesunken ist und die Temperatur der Metallschmelze wenigstens 1500°C erreicht hat.

23. Verfahren nach Anspruch 17 oder 20, dadurch gekennzeichnet, daß der Werkstoff des Bleches und die Blechstärke so ausgewählt sind, daß der Blechmantel erst nach einer vorgegebenen Verweilzeit von wenigstens 5 Minuten im Schmelzbad schmilzt.

24. Verfahren nach Anspruch 23, dadurch gekennzeichnet, daß die Verweilzeit wenigstens 5 Minuten beträgt.

## Claims

1. A process for feeding heat energy into a molten metal bath wherein solid carbon and solid metal materials which are to be melted down, preferably steel scrap, are introduced into a melting crucible which accommodates the molten metal bath, and oxygen is blown through at least one nozzle and/or at least one lance into residual molten metal which has remained in the crucible or into a molten metal bath which has been charged into the crucible, characterised in that carbon is charged into the crucible in a condition of being disposed in sheet metal containers, wherein the arterial of the sheet metal is so selected that its melting point lies in the temperature range in which the metal materials to be melted down melt, and that the sheet metal containers are pressed downwardly into the molten metal bath by solid metal materials lying thereupon, when the oxygen is injected.

2. A process according to claim 1 characterised in that the sheet metal containers are of a gas-permeable nature.

3. A process according to claim 1 or claim 2 characterised in that the sheet metal containers containing the carbon are heated prior to being immersed into the molten bath or prior to being covered with molten metal.

4. A process according to claim 3 characterised in that the sheet metal containers containing the carbon are heated to over 100°C.

5. A process according to claim 3 characterised in that the sheet metal containers containing the carbon are heated to a temperature close to the softening point of the sheet metal material.

6. A process according to one of claims 3 to 5 characterised in that the sheet metal containers containing the carbon are heated in the crucible prior to being covered with molten metal.

7. A process according to one of claims 3 to 6 characterised in that the sheet metal containers containing the carbon are heated in a charging material preheater through which hot waste gases from the crucible are passed.

8. A process according to claim 7 characterised in that the sheet metal containers containing the carbon are loaded into a charging material preheater arranged above the crucible, and the metal materials to be melted are loaded into the preheater on to the sheet metal containers, and the CO-bearing waste gases from the molten metal bath are subjected to post-combustion before they pass into the charging material preheater.

9. A process according to one of claim 1 to 8 characterised in that the metal materials used are iron materials and the molten metal is molten iron or steel.

10. A process according to one of claim 1 to 9 characterised in that the sheet metal containers, besides solid carbon, contain alloying additives.

11. A process according to one of claims 1 to 10 characterised in that the sheet metal containers, beside the solid carbon, contain a binding agent.

12. A process according to one of claims 1 to 11 characterised in that the sheet metal containers are of a volume of 0.5 to 50 dm³.

13. A process according to one of claim 1 to 12 characterised in that the sheet metal containers are from 1 to 2 dm in thickness.

14. A process according to one of claims 1 to 13 characterised in that the sheet metal containers are of a gauge of from 0.5 to 5 mm.

15. A process according to one of claims 1 to 14 characterised in that the sheet metal containers are formed by tubular elements which are closed at both ends.

16. A process according to one of claims 1 to 15 characterised in that the sheet metal containers containing the carbon are loaded into the crucible in such a way that they are removed from the direct action of the oxygen which is injected into the molten metal bath.

17. A process for feeding heat energy into a molten metal bath wherein solid carbon and solid metal materials which are to be melted down, preferably steel scrap, are introduced into a melting crucible which accomodates the molten metal bath, and oxygen is blown through at least one nozzle and/or at least one lance into residual molten metal which has remained in the crucible or into a molten metal bath which has been charged into the crucible, characterised in that carbon is charged into the crucible in a condition of being disposed in sheet metal containers, and melting-through of the sheet metal containers and the commencement of dissolution of the carbon contained in the sheet metal container is controlled through the choice of the material and possibly the gauge of the sheet metal containers.

18. A process according to one of claims 1 to 17 characterised in that the material of the sheet metal containers consists of steel and the melting temperature of the sheet metal container is controlled through the carbon content of the steel.

19. A process according to claim 17 or claim 18 characterised in that the material which determines the commencement of dissolution of the carbon and possibly the gauge of the sheet metal containers are selected having regard to the desired composition of the molten metal bath.

20. A process according to one of claims 17 to 19 characterised in that sheet metal containers consisting of materials which have various melting points and/or with different gauges of sheet metal are loaded.

21. A process according to claim 19 or claim 20 characterised in that the material of the sheet metal and the sheet metal gauge are so selected that the sheet metal casing melts through only when the carbon content of the molten metal bath has fallen to less than 2% by weight and the temperature of the molten metal bath has reached at least 1400°C.

22. A process according to claim 21 characterised in that the material of the sheet metal and the sheet metal gauge are so selected that the sheet metal casing melts through only when the carbon content of the molten metal bath has fallen to less than 1% by weight and the temperature of the molten metal bath has reached at least 1500°C.

23. A process according to claim 18 or claim 20 characterised in that the material of the sheet metal and the sheet metal gauge are so selected that the sheet metal casing melts only after a predetermined residence time of at least 5 minutes in the molten metal bath.

24. A process according to claim 23 characterised in that the residence time is at least 5 minutes.

## Revendications

1. Procédé d'apport d'énergie calorifique à du métal fondu, qui consiste à introduire du carbone solide et des matériaux métalliques solides à fondre, de préférence des riblons d'acier, dans un réservoir de fusion recevant le métal fondu et à insuffler de l'oxygène, par au moins une buse et/ou par au moins une lance, dans un résidu fondu restant dans le réservoir de fusion ou dans du métal fondu chargé dans le réservoir de fusion, caractérisé en ce qu'il consiste à charger le carbone introduit dans des récipients en tôle, le matériau de la tôle étant choisi de façon que son point de fusion se trouve dans la plage de température dans laquelle fondent les matériaux métalliques à fondre, et à repousser vers le bas, dans le métal fondu, lors de l'insufflation de l'oxygène, les récipients en tôle par des matériaux métalliques solides se trouvant au-dessus.

2. Procédé suivant la revendication 1, caractérisé en ce que les récipients en tôle sont perméables au gaz.

3. Procédé suivant la revendication 1 ou 2, caractérisé en ce qu'il consiste à chauffer les récipients en tôle contenant le carbone, avant leur introduction dans le métal fondu ou avant qu'ils soient recouverts du métal fondu.

4. Procédé suivant la revendication 3, caractérisé en ce qu'il consiste à porter les récipients en tôle contenant le carbone au-delà de 100°C.

5. Procédé suivant la revendication 3, caractérisé en ce qu'il consiste à porter les récipients en tôle contenant le carbone à une température proche du point du point de ramollissement du matériau de la tôle.

6. Procédé suivant l'une des revendications 3 à 5, caractérisé en ce qu'il consiste à chauffer les récipients en tôle contenant le carbone dans le réservoir de fusion avant de les recouvrir du métal fondu.

7. Procédé suivant l'une des revendications 3 à 6, caractérisé en ce qu'il consiste à chauffer les récipients en tôle contenant le carbone dans un dispositif de préchauffage du produit à charger, dans lequel passent les effluents gazeux et chauds du réservoir de fusion.

8. Procédé suivant la revendication 7, caractérisé en ce qu'il consiste à charger, dans un dispositif de préchauffage du produit à charger disposé au-dessus du réservoir de fusion, les récipients de tôle contenant le carbone et à charger sur ceux-ci les matériaux métalliques à fondre, et à faire subir aux effluents gazeux contenant du CO et sortant du bain métallique une post-combustion avant leur entrée dans le dispositif de préchauffage du produit à charger.

9. Procédé suivant l'une des revendications 1 à 8, caractérisé en ce qu'il consiste à utiliser, comme matériau métallique, des matériaux ferreux et, comme métal fondu, du fer fondu ou de l'acier fondu.

10. Procédé suivant l'une des revendications 1 à 9, caractérisé en ce que les récipients de tôle contiennent, outre du carbone solide, des additifs d'alliage ou d'autres additifs.

11. Procédé suivant l'une des revendications 1 à 10, caractérisé en ce que les récipients de tôle contiennent, outre du carbone solide, un liant.

12. Procédé suivant l'une des revendications 1 à 11, caractérisé en ce que les récipients de tôle ont un volume de 0,5 à 50 dm³.

13. Procédé suivant l'une des revendications 1 à 12, caractérisé en ce que les récipients de tôle ont une épaisseur de 1 à 2 dm.

14. Procédé suivant l'une des revendications 1 à 13, caractérisé en ce que les récipients de tôle ont une épaisseur de paroi de 0,5 à 5 mm.

15. Procédé suivant l'une des revendications 1 à 14, caractérisé en ce que les récipients de tôle sont constitués d'éléments tubulaires fermés aux deux extrémités.

16. Procédé suivant l'une des revendications 1 à 15, caractérisé en ce qu'il consiste à charger les récipients de tôle contenant du carbone dans le réservoir de fusion, de manière qu'ils soient soustraits à l'effet direct de l'oxygène insufflé dans le métal fondu.

17. Procédé d'apport d'énergie calorifique à du métal fondu, qui consiste à introduire du carbone solide et des matériaux métalliques solides à fondre, de préférence des riblons d'acier, dans un réservoir de fusion recevant le métal fondu et à insuffler de l'oxygène, par au moins une buse et/ou par au moins une lance, dans un résidu fondu restant dans le réservoir de fusion ou dans du métal fondu chargé dans le réservoir de fusion, caractérisé en ce qu'il consiste à charger du carbone introduit dans des récipients en tôle et à maîtriser la fusion des récipients en tôle et le début de la dissolution du carbone contenu dans le récipient en tôle, en choisissant le matériau et, le cas échéant, l'épaisseur de paroi des récipients en tôle.

18. Procédé suivant l'une des revendications 1 à 17, caractérisé en ce que le matériau des récipients en tôle est constitué d'acier, et le procédé consiste à se rendre maître de la température de fusion du récipient en tôle par la teneur en carbone de l'acier.

19. Procédé suivant la revendication 17 ou 18, caractérisé en ce qu'il consiste à choisir le matériau déterminant le début de la dissolution du carbone et, le cas échéant, l'épaisseur de paroi des récipients en tôle, en fonction de la composition du bain fondu qui est souhaitée.

20. Procédé suivant l'une des revendications 17 à 19, caractérisé en ce qu'il consiste à charger des récipients en tôle en matériaux de points de fusion différents et/ou des récipients en tôle d'épaisseurs de parois différentes.

21. Procédé suivant la revendication 19 ou 20, caractérisé en ce qu'il consiste à choisir le matériau de la tôle et l'épaisseur de la tôle de façon que l'enveloppe en tôle ne fonde que si la teneur en carbone du métal fondu s'abaisse à une valeur inférieure à 2% en poids, et que si la température du métal fondu atteint au moins 1400°C.

22. Procédé suivant la revendication 21, caractérisé en ce qu'il consiste à choisir le matériau de la tôle et l'épaisseur de la tôle de façon que l'enveloppe en tôle ne fonde que si la teneur en carbone du métal fondu s'abaisse à une valeur inférieure à 1% en poids, et que si la température du métal fondu atteint au moins 1500°C.

23. Procédé suivant la revendication 17 ou 20, caractérisé en ce qu'il consiste à choisir le matériau de la tôle et l'épaisseur de la tôle de façon que l'enveloppe en tôle fonde après une durée de séjour prescrite d'au moins 5 minutes dans le bain fondu.

24. Procédé suivant la revendication 23, caractérisé en ce que la durée de séjour est d'au moins 5 minutes.

# Fig. 1

# Fig. 2